# EUROPÄISCHE PATENTSCHRIFT

(11) **EP 4 392 337 B1**
(45) Veröffentlichungstag und Bekanntmachung des Hinweises auf die Patenterteilung: **29.04.2026**
(21) Anmeldenummer: 22769905.5
(22) Anmeldetag: 26.08.2022
(51) Int. Cl.: B65D 1/02, B65D 23/10

(54) **STRECKGEBLASENER KUNSTSTOFFBEHÄLTER UND VERFAHREN ZUM HERSTELLEN**
STRETCH-BLOW-MOLDED PLASTIC CONTAINER AND METHOD FOR PRODUCING SAME
RÉCIPIENT EN PLASTIQUE MOULÉ PAR ÉTIRAGE-SOUFFLAGE ET SON PROCÉDÉ DE PRODUCTION

(30) Priorität: 27.08.2021 CH 0702112021
(43) Veröffentlichungstag der Anmeldung: 03.07.2024
(73) Patentinhaber: ALPLA Werke Alwin Lehner GmbH & Co. KG, 6971 Hard (AT)
(72) Erfinder: ZMÖLNIG, Christian, 6858 Schwarzach (AT); DEMIR, Adem, 6923 Lauterach (AT); GRIECO, Danilo, 6800 Feldkirch (AT)
(74) Vertreter: Bohest AG Branch Ostschweiz
(86) Internationale Anmeldenummer: PCT/EP2022/073748
(87) Internationale Veröffentlichungsnummer: WO 2023/025925

(56) Entgegenhaltungen:
- WO-A1-2017/211540
- US-A- 3 579 620
- US-A1- 2007 145 646
- US-B2- 12 227 329

## Beschreibung

Die vorliegende Erfindung betrifft einen streckgeblasen Kunststoffbehälter und ein Verfahren zum Herstellen einer Wulst aus aufgeschmolzenem Material gemäss dem Oberbegriff der unabhängigen Ansprüche.

Aus dem Stand der Technik ist eine Vielzahl an Kunststoffbehältern bekannt.

Für die Herstellung von Kunststoffbehältern, insbesondere Kunststoffflaschen, sind unterschiedliche Verfahren bekannt, deren Anwendung nicht zuletzt auch von den verwendeten Kunststoffen abhängt. Meist werden die Kunststoffbehälter in einem Blasformverfahren hergestellt, bei dem Kunststoffbehälter, beispielsweise Kunststoffflaschen, durch Überdruck in einer Blasform in ihre endgültige Form aufgeblasen werden. Beim Blasformen unterscheidet man unterschiedliche Verfahrenstechniken, von denen insbesondere das Extrusionsblasverfahren, das Spritzblasen und das Spritzstreckblasverfahren zu nennen sind. Beim Extrusionsblasverfahren wird ein ein- oder mehrschichtiger Kunststoffschlauch heiss extrudiert, in eine Blasform eingebracht und über einen in eine Formkavität der Blasform eingefahrenen Blasdorn zu einem Kunststoffbehälter aufgeblasen. Beim Spritzblasverfahren handelt es sich um eine Kombination von Spritzgiessen und Blasformen. Dabei wird zunächst in einem Spritzgiessverfahren in einer Spritzform ein Preform hergestellt. Der Preform wird aus der Spritzform entformt, gegebenenfalls konditioniert und in die Formkavität einer Blasform eingebracht, in welcher er schliesslich mit Überdruck gemäss der durch die Formkavität vorgegebenen Form aufgeblasen wird. Beim Spritzstreckblasverfahren wird der in die Formkavität eingebrachte Preform beim Blasprozess zusätzlich mit einem Reckdorn gereckt. Das Aufblasen des Preforms kann unmittelbar anschliessend an seine Herstellung im Spritzgiessverfahren erfolgen. In alternativen Herstellverfahren kann die Weiterverarbeitung der Preforms auch räumlich und/oder zeitlich getrennt von der Herstellung des Preforms erfolgen. Schliesslich sei auch noch erwähnt, dass die Preforms auch in einem Fliesspressverfahren oder auch in einem Extrusionsblasverfahren hergestellt sein können.

Zudem wurden Kunststoffbehälter bekannt, die einen integralen Handgriff aufweisen, wobei sich herausgestellt hat, dass Kunststoffbehälter bei den Benutzern eine höhere Akzeptanz haben, wenn diese einen Handgriff aufweisen, der vom restlichen Behälter abgesetzt ist und mit der Hand vollständig umgriffen werden kann. Eine relativ einfache Lösung zum Bereitstellen derartiger Handgriffe wird dadurch erreicht, dass der Kunststoffbehälter eine einen Behälterkörper durchdringende Durchgreiföffnung aufweist.

Aus der WO 2017/211540 A1 ist ein Kunststoffbehälter, insbesondere aus PET, bekannt geworden, der eine Durchgreiföffnung und einen entsprechenden Handgriff aufweist. Die Durchgreiföffnung des Kunststoffbehälters der WO 2017/211540 A1 wird dadurch erhalten, dass nach dem Streckblasen des Kunststoffbehälters zwei Wandungsteile miteinander verschweisst werden und anschliessend ein entsprechender, durch die Schweissnaht abgetrennter, Bereich aus dem Behälter herausgetrennt wird.

Ein vergleichbarer Kunststoffbehälter aus Polypropylen ist mit der EP 1 835 461 A2 bekannt geworden. Das Dokument US 12 227 329 B2 offenbart die Oberbegriffe der Ansprüche 1 und 9.

Beide Kunststoffbehälter weisen eine in der Durchgreiföffnung liegende Verbindungsnaht auf. Diese kann unter Umständen eine Schwachstelle am Kunststoffbehälter bilden, was insbesondere im Versandhandel, bei dem die Handhabung der Produkte nicht vollständig kontrollierbar ist und diese immer wieder über ihre zulässigen Masse belastet werden, nachteilig sein kann.

Es ist daher die Aufgabe der Erfindung, zumindest einen oder mehrere Nachteile des Standes der Technik zu beheben. Insbesondere soll ein Kunststoffbehälter bereitgestellt werden, der stabil ist und höhere Belastungen erträgt.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Eine erfindungsgemässe Vorrichtung betrifft einen streckgeblasenen Kunststoffbehälter mit einem ein Füllvolumen bildenden Behälterkörper. Der Kunststoffbehälter weist einen am Behälterkörper ausgebildeten Handgriff auf. Zur Ausbildung des Handgriffs ist ein erster Teilbereich einer ersten Wandung des Behälterkörpers mit einem zweiten Teilbereich einer der ersten Wandung gegenüberliegenden zweiten Wandung stoffschlüssig miteinander verbunden, sodass sich das Füllvolumen umlaufend um diese stoffschlüssige Verbindung erstreckt. Mit anderen Worten ist innerhalb des Behälterkörpers ein einziges, zusammenhängendes Füllvolumen geschaffen.

Innerhalb des Füllvolumen zwischen der ersten Wandung und der zweiten Wandung ist ein Wulst aus aufgeschmolzenem Material angeordnet.

Die Anordnung eines Wulstes zwischen der ersten Wandung und der zweiten Wandung ermöglicht es, eine an der Verbindung zwischen der ersten Wandung und der zweiten Wandung auftretende Kerbwirkung zu reduzieren. Der Kunststoffbehälter wird dadurch stabiler und weniger anfällig gegenüber Stössen.

Der Wulst kann als Bestandteil einer Schweissnaht ausgebildet sein. Dadurch kann eine integrale Verbindung zwischen dem Wulst, der ersten Wandung und der zweiten Wandung und entsprechend der Schweissnaht geschaffen werden.

Der Wulst kann die erste Wandung und die zweite Wandung in einem Bereich verbinden, in welchem die erste Wandung und/oder die zweite Wandung eine Krümmung aufweist.

In Bereichen, in welchen die Wandungen Krümmungen aufweisen, sind diese besonders anfällig gegenüber einem Abschälen unter Krafteinwirkung von aussen.

Durch die Anordnung eines Wulstes in diesem Bereich können die entsprechenden Effekte reduziert werden, was gesamthaft zu einer höheren Stabilität des Kunststoffbehälters führt.

Der Wulst kann die erste Wandung und die zweite Wandung in einem Bereich verbinden, in welchem die erste Wandung von der zweiten Wandung beabstandet ist.

Auch in Bereichen, in welchen sich zwischen den zu verbindenden Wandungen Spalten oder Abstände bilden, ist eine entsprechende Verbindung zwischen diesen Wandungen anfälliger gegenüber äusseren Einflüssen, insbesondere anfälliger gegen Krafteinwirkung. Durch das Vorsehen eines Wulstes im Bereich eines Abstandes zwischen der ersten Wandung und der zweiten Wandung, insbesondere im Bereich eines Spaltes, kann einer Anfälligkeit auf Versagen des Behälters entgegengewirkt werden.

Vorzugsweise überragt der Wulst die in Richtung des Füllvolumens gerichteten Oberflächen der ersten Wandung und der zweiten Wandung in Richtung des Füllvolumens.

Durch eine derartige Anordnung kann eine Vertiefung oder eine Kerbe zwischen der ersten Wandung und der zweiten Wandung gänzlich verhindert werden und die Verbindung der ersten Wandung und der zweiten Wandung in diesem Bereich verstärkt werden.

Vorzugsweise ist der Wulst entlang des ersten Teilbereichs und/oder des zweiten Teilbereichs umlaufend ausgebildet.

Mit anderen Worten bildet der Wulst eine umlaufende geschlossene Verbindung zwischen der ersten Wandung und der zweiten Wandung. Ein entsprechender Spalt zwischen der ersten Wandung und der zweiten Wandung ist somit gegenüber dem Füllvolumen abgeschlossen.

Der erste Teilbereich und der zweite Teilbereich können auf der der stoffschlüssigen Verbindung abgewandten Seite des Füllvolumens abgetrennt sein, sodass eine Durchgreiföffnung ausgebildet ist.

Der Kunststoffbehälter kann aus einem Polymer mit Dipol, insbesondere PET, gebildet sein.

Derartige Polymere eigenen sich besonders gut für das Hochfrequenzschweissen, da deren Moleküle besonders gut angeregt werden können.

Ein weiterer Aspekt der Erfindung betrifft ein Verfahren zum Herstellen einer Wulst aus aufgeschmolzenem Material zwischen einer ersten Wandung und einer der ersten Wandung gegenüberliegenden zweiten Wandung eines Behälterkörpers. Das Verfahren umfasst die Schritte:
- Bereitstellen eines streckgeblasenen Kunststoffbehälters mit einem ein Füllvolumen bildenden Behälterkörper,
- stoffschlüssiges Verbinden eines ersten Teilbereichs der ersten Wandung des Behälterkörpers mit einem zweiten Teilbereich der zweiten Wandung zur Ausbildung eines am Behälterkörper ausgebildeten Handgriffs, sodass sich das Füllvolumen umlaufend um diese stoffschlüssige Verbindung erstreckt.

Die stoffschlüssige Verbindung wird durch Hochfrequenzschweissen oder Reibschweissen erstellt. Während des Schweissvorgangs wird Druck auf die Schweisszone ausgeübt, sodass zumindest ein Teil der während des Schweissvorgangs entstehenden Schmelze zur Bildung des Wulstes aus der Schweisszone gedrückt wird.

Das Hochfrequenzschweissen und auch das Reibschweissen ist ein Verfahren, welches es ermöglicht, die zu fügenden Elemente im Bereich ihres Kontaktes aufzuschmelzen. Durch den Druck, der auf die zu fügenden Wandungen ausgeübt wird, kann die so entstandene Schmelze aus dem Innern beziehungsweise aus dem Bereich zwischen der ersten Wandung und der zweiten Wandung nach aussen gedrückt werden, sodass ein Wulst entsteht, der als integraler Bestandteil der Schweissnaht ausgebildet ist und entsprechend gemeinsam mit der Schweissnaht eine entsprechend hohe Festigkeit aufweist. Durch das Auftreten als Schmelze kann sich dieser Wulst auch mit den Bereichen der ersten Wandung und der zweiten Wandung verbinden, die beispielsweise nicht genau aufeinander anliegen und/oder durch die entsprechenden Schweissvorrichtungen nicht direkt erreicht werden können.

Vorzugsweise wird die Schmelze in Richtung des Füllvolumens gedrückt.

Entsprechend entsteht der Wulst auch im Bereich des Behälters, der zum Füllvolumen hin gerichtet ist und in welchem die erste Wandung und die zweite Wandung aufeinandertreffen.

Gleichzeitig wird auch ein Teil der Schmelze in die entgegengesetzte Richtung gedrückt, sodass sich die erste Wandung und die zweite Wandung auch in Bereichen verbindet, die dem Füllvolumen abgewandt sind.

Vorzugsweise wird die Schmelze so lange aus der Schweisszone gedrückt, bis ein sich aus der Schmelze bildender Wulst die erste Wandung und die zweite Wandung in einem Bereich verbindet, in welchem die erste Wandung und/oder die zweite Wandung eine Krümmung aufweist.

Dadurch kann erreicht werden, dass ein Spalt zwischen der ersten Wandung und der zweiten Wandung mit einem Wulst gefüllt wird und eine Kerbwirkung reduziert wird. Das Abschälen der ersten Wandung von der zweiten Wandung im Falle einer übermässigen Krafteinwirkung kann entsprechend länger verhindert werden.

Vorzugsweise wird die Schmelze so lange aus der Schweisszone gedrückt, bis ein sich aus der Schmelze bildender Wulst die erste Wandung und die zweite Wandung in einem Bereich verbindet, in welchem die erste Wandung von der zweiten Wandung beabstandet ist.

Dadurch kann ebenfalls erreicht werden, dass ein Spalt zwischen der ersten Wandung und der zweiten Wandung mit einem Wulst gefüllt wird und eine Kerbwirkung reduziert wird. Das Abschälen der ersten Wandung von der zweiten Wandung im Falle einer übermässigen Krafteinwirkung kann entsprechend länger verhindert werden.

Es kann vorgesehen sein, dass die Schmelze so lange aus der Schweisszone gedrückt wird, bis ein sich aus der Schmelze bildender Wulst die in Richtung des Füllvolumens gerichteten Oberflächen der ersten Wandung und der zweiten Wandung in Richtung des Füllvolumens überragt.

Der Oberfläche der ersten Wandung und die Oberfläche der zweiten Wandung sowie eine Oberfläche des Wulstes bilden eine gemeinsame Oberfläche, die insbesondere frei von Kerben und/oder Vertiefungen ist. Eine derartige gemeinsame Oberfläche ist insbesondere wenig anfällig auf Krafteinwirkung und kann Abschälvorgängen lange entgegenstehen.

Vor dem stoffschlüssigen Verbinden des ersten Teilbereichs mit dem zweiten Teilbereich kann der erste Teilbereich und der zweite Teilbereich mit beweglichen Stempeln innerhalb einer Blasform miteinander in Anlage gebracht werden.

Dies ermöglicht es, die spätere Form des Kunststoffbehälters in weiten Bereichen zu definieren und die zu fügenden Teilbereiche der ersten Wandung und der zweiten Wandung entsprechend in eine Form zu bringen, die für den Schweissvorgang vorteilhaft ist.

Nach dem stoffschlüssigen Verbinden des ersten Teilbereichs und des zweiten Teilbereichs kann auf der der stoffschlüssigen Verbindung abgewandten Seite des Füllvolumens der erste Teilbereich und der zweite Teilbereich abgetrennt werden, sodass eine Durchgreiföffnung ausgebildet wird.

Dadurch kann ein Behälter geschaffen werden, der optisch ansprechend ist und eine angenehme Haptik aufweist und einen Handgriff aufweist, der vom Benutzer vollständig umschlossen werden kann. Dadurch ist ein sicheres Halten des Behälters ermöglicht.

Anhand von schematischen Figuren wird nachfolgend die Erfindung anhand eines Ausführungsbeispiels erläutert. Es zeigt:
- Figur 1:: Eine perspektivische Ansicht eines Kunststoffbehälters;
- Figur 2A, 2B:: eine schematische Ansicht eines Blasvorgangs;
- Figur 3:: eine Schnittansicht durch einen Kunststoffbehälter;
- Figur 4:: eine Schnittansicht durch einen Kunststoffbehälter;
- Figur 5:: eine Detailansicht aus der Figur 4;
- Figur 6:: die Detailansicht aus der Figur 5;
- Figur 7:: die Detailansicht aus der Figur 5;
- Figur 8:: die Detailansicht aus der Figur 5.

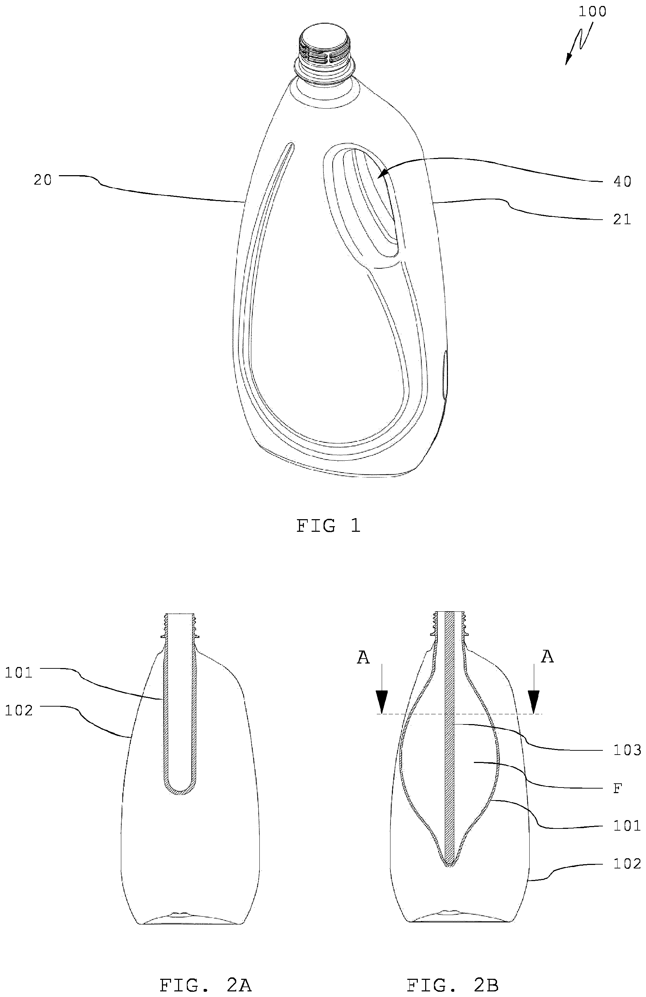

Figur 1 zeigt einen Kunststoffbehälter 100 mit einem Behälterkörper 20 und einem Handgriff 21. Der Handgriff 21 ist als integraler Bestandteil des Behälterkörpers 20 ausgebildet. Der Kunststoffbehälter 100 weist eine nicht näher bezeichnete obenliegende Öffnung sowie einen zu dieser Öffnung abgewandten Behälterboden auf. Der Behälterboden und die Öffnung schliessen den Behälterkörper 20 ab.

Der Behältergriff 21 ist derart angeordnet, dass dieser vollständig umgriffen werden kann. Dazu ist am Behälterkörper 20 eine Durchgreiföffnung 40 vorgesehen. Um die Durchgreiföffnung 40 erstreckt sich ein Füllvolumen. Das Füllvolumen füllt den Behälterkörper 20 und den Handgriff 21 auf. Mit anderen Worten ist das Innere des Handgriffs 21 mit dem Füllvolumen verbunden.

Die Figuren 2A und 2B zeigen schematisch einen Blasprozess. Ein Preform 101 wird in eine Form 102 eingebracht. Der Preform 101 ist zu diesem Zeitpunkt bereits temperiert. Die Form 102 weist im Wesentlichen die spätere Aussenkontur des Kunststoffbehälters auf. Wie in der Figur 2B erkennbar ist, wird zum Aufblasen des Preforms eine Reckstange 103 in den Preform 101 eingebracht und der Preform 101 entsprechend gestreckt. Gleichzeitig wird ein heisses Blasmedium mit Überdruck in den Preform 101 eingeblasen, sodass sich dieser an die Innenflächen der Blasform 102 anlegen kann.

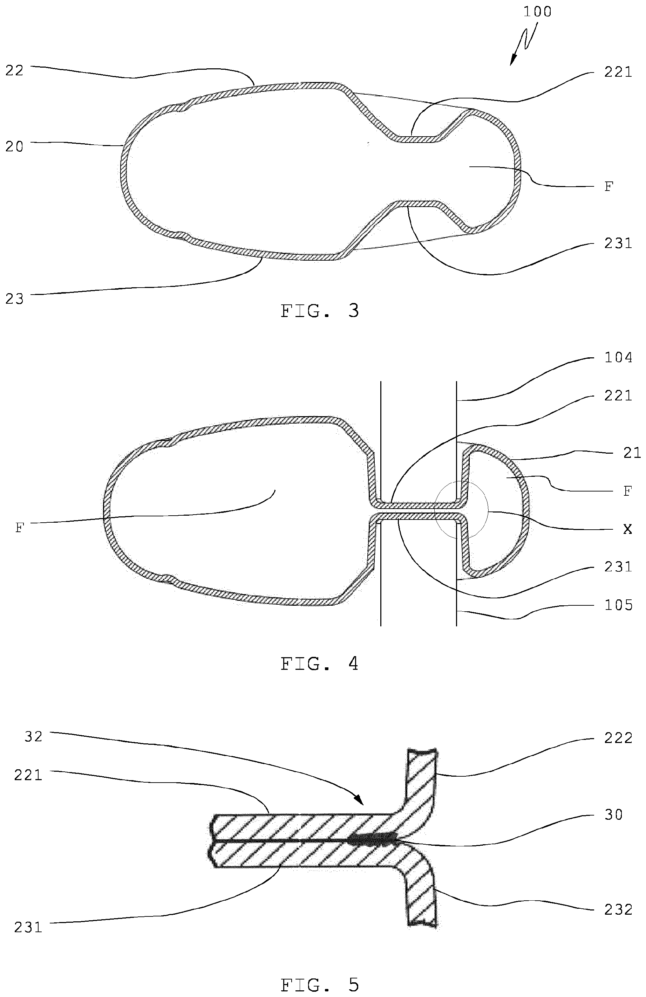

Die Figur 3 zeigt einen Querschnitt entlang der Linie A-A der Figur 2B, wobei der Querschnitt in zeitlicher Abfolge nach dem vollständigen Aufblasen des Behälters 100 gezeigt ist. Der Behälterkörper 20 weist eine erste Wandung 22 und eine der ersten Wandung 22 gegenüberliegende zweite Wandung 23 auf. Die erste Wandung 22 weist einen Teilbereich 221 auf, der in Bezug zu einer Hüllkurve in Richtung des Inneren des Behälterkörpers 20 geformt ist. Auch die zweite Wandung 23 weist einen Teilbereich 231 auf, der in Bezug zu einer Hüllkurve in Richtung des Inneren des Behälterkörpers 20 geformt ist. Die Kontur des Querschnitts, wie er in der Figur 3 gezeigt ist, kann durch die Blasform 102 und das entsprechende Aufblasen geschaffen werden. Die Teilbereiche 221 und 231 sind voneinander beabstandet, sodass auch der Bereich des späteren Handgriffs, in der vorliegenden Figur rechts, vollständig aufgeblasen werden kann. Die Wandungen 22 und 23 begrenzen ein Füllvolumen F.

Die Figur 4 zeigt einen Querschnitt analog des Querschnitts gemäss der Figur 3. In der Figur 4 ist dargestellt, dass die Teilbereiche 221 und 231 mit Stempeln 104 und 105 verformt werden, sodass diese Teilbereiche 221 und 231 miteinander in Anlage gebracht werden. Dieser Vorgang kann vorzugsweise noch vorgenommen werden, solange sich der aufgeblasene Behälter noch innerhalb der Blasform befindet. Dies ermöglicht es, innerhalb des Füllvolumens F beispielsweise einen Überdruck aufrecht zu erhalten, sodass die Wandungen des Behälterkörpers an die Innenflächen der Blasform gedrückt werden, sodass die verbleibende Kontur des Behälterkörpers entsprechend ausgeformt bleibt. Das Füllvolumen F ist nach wie vor innerhalb des Handgriffs 21 und des verbleibenden Behälterkörpers 20 ausgebildet.

Die Figur 5 zeigt eine Detailansicht X aus der Figur 4. In dieser Detailansicht ist ein Teil des ersten Teilbereichs 221 und ein Teil des zweiten Teilbereichs 231 illustriert. Die Teilbereiche 221 und 231 sind miteinander in Anlage gebracht und insbesondere für eine nachfolgende Schweissung vorbereitet. Die Teilbereiche 221 und 232 gehen jeweils in die Wandungen 22 und 23 über.

Die Teilbereiche 221 und 231 werden durch eine Hochfrequenzschweissung miteinander verbunden. Zwei hier nicht näher dargestellte Elektroden pressen die Teilbereiche 221 und 231 aufeinander, sodass dazwischenliegendes Material aufgeschmolzen wird. Der Bereich, der aufeinandergepresst wird, ist vorliegend als Schweisszone 32 bezeichnet. Dies betrifft einen Bereich, der unmittelbar durch die Elektroden beaufschlagt wird. Durch das Aufschmelzen entsteht eine Schweissnaht 30. Die aufeinander liegenden Oberflächen der Teilbereiche 221 und 231 weichen also im Bereich der Schweisszone auf und eine Schmelze entsteht, die eine Schweissnaht bildet. Die Elektroden drücken die Teilbereiche 221 und 231 mit hohem Druck aufeinander. In der Darstellung gemäss der Figur 5 rechts weisen die Teilbereiche 221 und 231, beziehungsweise die Wandungen 22 und 23, je eine Krümmung auf in dem Bereich, in welchem sich der Handgriff 21 (siehe dazu Figur 4) aufweitet. Im Bereich dieser Krümmung beginnen die Oberflächen 222 und 232 der Wandungen 22 und 23 sich voneinander zu distanzieren, sodass ein Spalt entsteht.

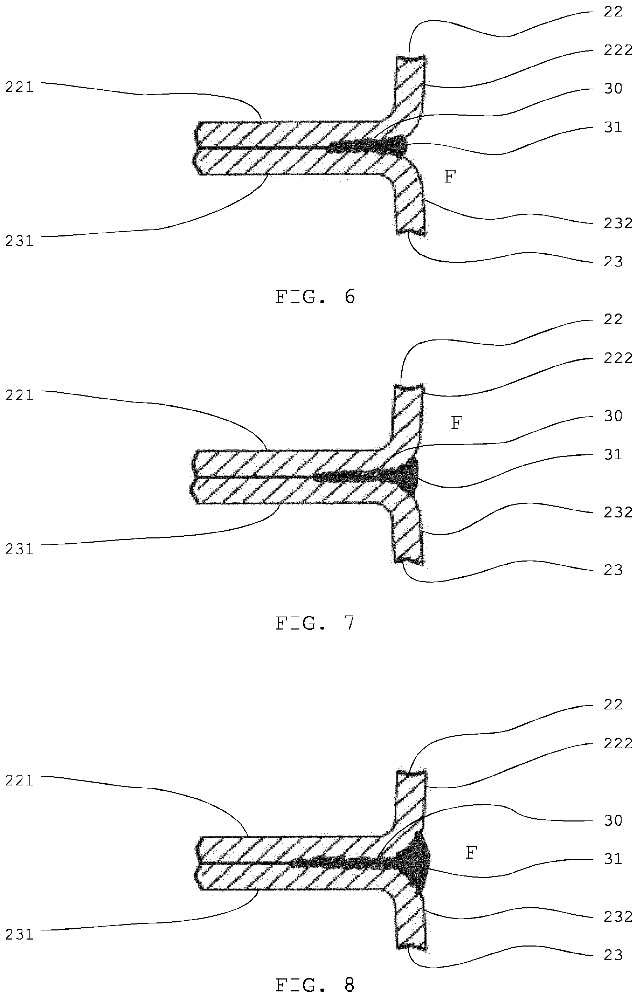

Die Figur 6 zeigt eine der Figur 5 entsprechende Detailansicht in einem zeitlich späteren Punkt des Verfahrens. Durch den durch die Elektroden anliegenden Druck wird zumindest ein Teil der Schmelze aus der Schweissnaht 30, insbesondere aus der Schweisszone 32 (siehe Figur 5), in Richtung des Füllvolumens F hinausgedrückt, sodass sich zwischen der ersten Wandung 22 und der zweiten Wandung 23 ein Wulst 31 ausbildet. Dadurch kann auch in einem Bereich, der von den Elektroden nicht unmittelbar beaufschlagt werden kann, eine Fügezone geschaffen werden. Die Distanz zwischen der Schweissnaht 30, und vorliegend dem Wulst 31, und einem Kraftangriffspunkt an den Wandungen 22 oder 23 verringert sich. Dadurch kann die Verbindung höheren Belastungen standhalten.

Wie in der Figur 6 illustriert, kann der Schweissvorgang auch noch weiter fortgesetzt werden. Der Wulst 31 füllt dann einen durch die Krümmung der Wandung 22 und 23 entstandenen Spalt auf, was unmittelbar zu einer Reduzierung der Kerbwirkung zwischen der Wandung 22 und 23 führt. Der Wulst 31 schliesst den Spalt zwischen der ersten Wandung 22 und der zweiten Wandung 23 in Richtung zum Füllvolumen hin. Der Wulst 31 verbindet also die erste Wandung 22 und die zweite Wandung 23 in einem Bereich, in welchem die erste Wandung 22 und die zweite Wandung 23 eine Krümmung aufweist. In diesem Bereich ist ebenfalls die erste Wandung 22 von der zweiten Wandung 23 beabstandet. Der Wulst 31 verbindet die Wandungen 22 und 23 also in diesem Bereich und überbrückt einen Spalt zwischen der ersten Wandung 22 und der zweiten Wandung 23.

Die Figur 7 zeigt eine der Figur 6 entsprechende Detailansicht in einem zeitlich späteren Punkt des Verfahrens, wenn dies noch weiter fortgeführt wird. Durch weiteres Aufschmelzen und durch den Druck der Elektroden auf die Teilbereiche 221 und 231 wurde die Schmelze zu beiden Seiten der ursprünglichen Schweissnaht 30 (siehe dazu Figur 5) gedrückt. Durch die vorliegende Anordnung der Wandungen 22 und 23 und der entsprechenden Teilbereiche 221 und 231 ist ein Grossteil der Schmelze der Schweissnaht 30 in Richtung der offenen Seite des Spaltes zwischen der ersten Wandung 22 und der zweiten Wandung 23 gedrückt worden und entsprechend in Richtung des Füllvolumens F. Der Wulst 31 füllt den Spalt zwischen der ersten Wandung 22 und der zweiten Wandung 23 nahezu aus. Die Kerbwirkung, die durch die vorliegende Geometrie auftritt, ist weiter verringert, da die Angriffsfläche und die Vertiefungen im Bereich des Spaltes verringert sind. Der Wulst 31 füllt den Spalt in Richtung des Füllvolumens F nahezu aus.

Die Figur 8 zeigt eine der Figur 7 entsprechende Detailansicht in einem zeitlich späteren Punkt des Verfahrens, wenn dies noch weiter fortgeführt wird. Durch weiteres Aufschmelzen und durch den Druck der Elektroden auf die Teilbereiche 221 und 231 wurde die Schmelze zu beiden Seiten der ursprünglichen Schweissnaht 30 (siehe dazu Figur 5) noch weiter hinaus gedrückt. Der hier entstandene Wulst 31 überragt die Oberflächen 222 und 232 der Wandungen 22 und 23 die in Richtung des Füllvolumens F gerichtet sind, sodass die Wandungen 22 und 23 im Bereich des Spaltes und somit im Bereich ihrer Krümmung verstärkt sind.

Sämtliche Ausbildungen der Schweissnaht 30 und des Wulstes 31, wie sie zu den Figuren 6 bis 8 beschrieben sind, verstärken die Verbindung zwischen den Wandungen 22 und 23 und erhöhen die Festigkeit der Verbindung und verringern insbesondere die Anfälligkeit gegenüber Versagen. Durch Stösse auf den Kunststoffbehälter kann der Druck innerhalb des Füllvolumens F relativ hoch werden. Durch die verminderte Kerbwirkung und das Ausfüllen des Spaltes mit dem Wulst 31 kann der Einfluss derartiger Stösse auf die Schweissnaht 30, als auf die Verbindung zwischen der ersten Wandung 22 und der zweiten Wandung 23, verringert werden.

Es versteht sich, dass der Wulst 31 jeweils umlaufend um die Teilbereiche 231 und 221 ausgebildet sein kann und entsprechend diese gegenüber dem Füllvolumen F abschliesst. Die zugehörige Schweissnaht 30 bildet also einen zusammenhängenden, umlaufenden Abschluss der Teilbereiche 221 und 231 gegenüber dem Behälterkörper 20. Die Schweissnaht bildet eine stoffschlüssige Verbindung. Der erste Teilbereich 221 und der zweite Teilbereich 231 können auf der der stoffschlüssigen Verbindung abgewandten Seite des Füllvolumens abgetrennt werden, sodass eine Durchgreiföffnung 40 ausgebildet wird (siehe dazu Figur 1).

## Patentansprüche

1. Streckgeblasener Kunststoffbehälter (100) mit einem ein Füllvolumen (F) bildenden Behälterkörper (20) und einem am Behälterkörper ausgebildeten Handgriff (21), wobei zur Ausbildung des Handgriffs (21) ein erster Teilbereich (221) einer ersten Wandung (22) des Behälterkörpers (20) mit einem zweiten Teilbereich (231) einer der ersten Wandung (22) gegenüberliegenden zweiten Wandung (23) des Behälterkörpers (20) stoffschlüssig miteinander verbunden ist, sodass sich das Füllvolumen (F) umlaufend um diese stoffschlüssige Verbindung erstreckt, **dadurch gekennzeichnet, dass** innerhalb des Füllvolumens (F) zwischen der ersten Wandung (22) und der zweiten Wandung (23) ein Wulst (31) aus aufgeschmolzenem Material angeordnet ist.

2. Kunststoffbehälter (100) nach Anspruch 1, **dadurch gekennzeichnet, dass** der Wulst (31) als Bestandteil einer Schweissnaht (30) ausgebildet ist.

3. Kunststoffbehälter (100) nach Anspruch 1 oder 2, **dadurch gekennzeichnet, dass** der Wulst (31) die erste Wandung (22) und die zweite Wandung (23) in einem Bereich verbindet, in welchem die erste Wandung (22) und/oder die zweite Wandung (23) eine Krümmung aufweist.

4. Kunststoffbehälter (100) nach einem der Ansprüche 1 bis 3, **dadurch gekennzeichnet, dass** der Wulst (31) die erste Wandung (22) und die zweite Wandung (23) in einem Bereich verbindet, in welchem die erste Wandung (22) von der zweiten Wandung (23) beabstandet ist.

5. Kunststoffbehälter (100) nach einem der Ansprüche 1 bis 4, **dadurch gekennzeichnet, dass** der Wulst (31) die in Richtung des Füllvolumens gerichteten Oberflächen (222, 232) der ersten Wandung (22) und der zweiten Wandung (23) in Richtung des Füllvolumens überragt.

6. Kunststoffbehälter (100) nach einem der Ansprüche 1 bis 5, **dadurch gekennzeichnet, dass** der Wulst (31) entlang des ersten Teilbereichs (221) und/oder zweiten Teilbereichs (231) umlaufend ausgebildet ist.

7. Kunststoffbehälter (100) nach einem der Ansprüche 1 bis 6, **dadurch gekennzeichnet, dass** der erste Teilbereich (221) und der zweite Teilbereich (231) auf der der stoffschlüssigen Verbindung abgewandten Seite des Füllvolumens abgetrennt ist, sodass eine Durchgreiföffnung (40) ausgebildet ist.

8. Kunststoffbehälter (100) nach einem der Ansprüche 1 bis 7, **dadurch gekennzeichnet, dass** dieser aus einem Polymer mit Dipol, insbesondere PET, gebildet ist.

9. Verfahren zum Herstellen einer Wulst (31) aus aufgeschmolzenem Material zwischen einer ersten Wandung (22) und einer der ersten Wandung (22) gegenüberliegenden zweiten Wandung (23) eines Behälterkörpers (20), umfassend die Schritte:
- Bereitstellen eines streckgeblasenen Kunststoffbehälters (100) mit einem ein Füllvolumen bildenden Behälterkörper (20)
- stoffschlüssiges Verbinden eines ersten Teilbereichs (221) der ersten Wandung (22) des Behälterkörpers (20) mit einem zweiten Teilbereich (231) der zweiten Wandung (23) zur Ausbildung eines am Behälterkörper (20) ausgebildeten Handgriffs (21), sodass sich das Füllvolumen umlaufend um diese stoffschlüssige Verbindung erstreckt,
**dadurch gekennzeichnet, dass**
die stoffschlüssige Verbindung durch Hochfrequenzschweissen oder Reibschweissen erstellt wird, wobei während des Schweissvorgangs Druck auf die Schweisszone (32) ausgeübt wird, sodass zumindest ein Teil der während des Schweissvorgangs entstehenden Schmelze zur Bildung des Wulstes (31) aus der Schweisszone (32) gedrückt wird.

10. Verfahren nach Anspruch 9, **dadurch gekennzeichnet, dass** die Schmelze in Richtung des Füllvolumens gedrückt wird.

11. Verfahren nach Anspruch 9 oder 10, **dadurch gekennzeichnet, dass** die Schmelze solange aus der Schweisszone (32) gedrückt wird, bis ein sich aus der Schmelze bildender Wulst (31) die erste Wandung (22) und die zweite Wandung (23) in einem Bereich verbindet, in welchem die erste Wandung (22) und/oder die zweite Wandung (23) eine Krümmung aufweist.

12. Verfahren nach einem der Ansprüche 9 bis 11, **dadurch gekennzeichnet, dass** die Schmelze solange aus der Schweisszone (32) gedrückt wird, bis ein sich aus der Schmelze bildender Wulst (31) die erste Wandung (22) und die zweite Wandung (23) in einem Bereich verbindet, in welchem die erste Wandung (22) von der zweiten Wandung (23) beabstandet ist.

13. Verfahren nach einem der Ansprüche 9 bis 12, **dadurch gekennzeichnet, dass** die Schmelze solange aus der Schweisszone (32) gedrückt wird, bis ein sich aus der Schmelze bildender Wulst (31) die in Richtung des Füllvolumens gerichteten Oberflächen (222, 232) der ersten Wandung (22) und der zweiten Wandung (23) in Richtung des Füllvolumens überragt.

14. Verfahren nach einem der Ansprüche 9 bis 13, **dadurch gekennzeichnet, dass** vor dem stoffschlüssigen Verbinden des ersten Teilbereichs (221) mit dem zweiten Teilbereich (231) der erste Teilbereich (221) und der zweite Teilbereich (231) mit beweglichen Stempeln (104, 105) innerhalb einer Blasform (102) miteinander in Anlage gebracht werden.

15. Verfahren nach einem der Ansprüche 9 bis 14, **dadurch gekennzeichnet, dass** nach dem stoffschlüssigen Verbinden der erste Teilbereich (221) und der zweite Teilbereich (231) auf der der stoffschlüssigen Verbindung abgewandten Seite des Füllvolumens (F) abgetrennt wird, sodass eine Durchgreiföffnung (40) ausgebildet wird.

## Claims

1. Stretch-blow-molded plastic container (100) having a container body (20), which forms a filling volume (F), and a handle (21), which is formed on the container body, wherein, in order to from the handle (21), a first sub-region (221) of a first wall (22) of the container body (20) is integrally connected to a second sub-region (231) of a second wall (23) of the container body (20) lying opposite the first wall (22), such that the filling volume (F) extends peripherally around this integral connection, **characterized in that** a bead (31) made of melted material is arranged within the filling volume (F) between the first wall (22) and the second wall (23).

2. Plastic container (100) according to claim 1, **characterized in that** the bead (31) is part of a weld seam (30).

3. Plastic container (100) according to claim 1 or 2, **characterized in that** the bead (31) connects the first wall (22) and the second wall (23) in a region in which the first wall (22) and/or the second wall (23) has a curvature.

4. Plastic container (100) according to any one of claims 1 to 3, **characterized in that** the bead (31) connects the first wall (22) and the second wall (23) in a region in which the first wall (22) is spaced apart from the second wall (23).

5. Plastic container (100) according to any one of claims 1 to 4, **characterized in that** the bead (31) projects, toward the filling volume, beyond the surfaces (222, 232) of the first wall (22) and of the second wall (23) that face the filling volume.

6. Plastic container (100) according to any one of claims 1 to 5, **characterized in that** the bead (31) is formed peripherally along the first sub-region (221) and/or the second sub-region (231).

7. Plastic container (100) according to any one of claims 1 to 6, **characterized in that** the first sub-region (221) and the second sub-region (231) are severed on the side of the filling volume remote from the integral connection, so that a reach-through opening (40) is formed.

8. Plastic container (100) according to any one of claims 1 to 7, **characterized in that** the plastic container is formed of a polymer having a dipole, in particular PET.

9. Method for producing a bead (31) made of melted material between a first wall (22) and a second wall (23) of a container body (20), the second wall lying opposite the first wall (22), comprising the steps of:
- providing a stretch-blow-molded plastic container (100) having a container body (20) which forms a filling volume,
- integrally connecting a first sub-region (221) of the first wall (22) of the container body (20) to a second sub-region (231) of the second wall (23) to form a handle (21) formed on the container body (20), such that the filling volume extends peripherally around this integral connection, **characterized in that**
the integral connection is created by high-frequency welding or friction welding, wherein pressure is exerted on the welding zone (32) during the welding process so that at least a portion of the melt produced during the welding process is pressed out of the welding zone (32) to form the bead (31).

10. Method according to claim 9, **characterized in that** the melt is pressed toward the filling volume.

11. Method according to claim 9 or 10, **characterized in that** the melt is pressed out of the welding zone (32) until a bead (31) formed from the melt connects the first wall (22) and the second wall (23) in a region in which the first wall (22) and/or the second wall (23) has a curvature.

12. Method according to any one of claims 9 to 11, **characterized in that** the melt is pressed out of the welding zone (32) until a bead (31) formed from the melt connects the first wall (22) and the second wall (23) in a region in which the first wall (22) is spaced apart from the second wall (23).

13. Method according to any one of claims 9 to 12, **characterized in that** the melt is pressed out of the welding zone (32) until a bead (31) formed from the melt projects, toward the filling volume, beyond the surfaces (222, 232) of the first wall (22) and of the second wall (23) that face the filling volume.

14. Method according to any one of claims 9 to 13, **characterized in that**, before the first sub-region (221) is integrally connected to the second sub-region (231), the first sub-region (221) and the second sub-region (231) are brought into contact with one another by means of movable dies (104, 105) within a blow mold (102).

15. Method according to any one of claims 9 to 14, **characterized in that**, after the integral connecting, the first sub-region (221) and the second sub-region (231) are severed on the side of the filling volume (F) remote from the integral connection, so that a reach-through opening (40) is formed.

## Revendications

1. Récipient en plastique (100) moulé par étirage-soufflage, avec un corps de récipient (20), formant un volume de remplissage (F), et une anse (21) formée sur le corps de récipient, sachant que pour former l'anse (21), une première zone partielle (221) d'une première paroi (22) du corps de récipient (20) est reliée par matière à une deuxième zone partielle (231) d'une deuxième paroi (23) du récipient (20) située en vis-à-vis de la première paroi (22), de sorte que le volume de remplissage (F) s'étend de manière périphérique autour de cette liaison par matière, **caractérisé en ce que**, à l'intérieur du volume de remplissage (F), un bourrelet (31) en matière fondue est disposé entre la première paroi (22) et la deuxième paroi (23) .

2. Récipient en plastique (100) selon la revendication 1, **caractérisé en ce que** le bourrelet (31) est réalisé en tant que partie d'un joint de soudure (30).

3. Récipient en plastique (100) selon la revendication 1 ou 2, **caractérisé en ce que** le bourrelet (31) relie la première paroi (22) et la deuxième paroi (23) dans une région dans laquelle la première paroi (22) et/ou la deuxième paroi (23) présente une courbure.

4. Récipient en plastique (100) selon une des revendications 1 à 3, **caractérisé en ce que** le bourrelet (31) relie la première paroi (22) et la deuxième paroi (23) dans une région dans laquelle la première paroi (22) est espacée de la deuxième paroi (23).

5. Récipient en plastique (100) selon une des revendications 1 à 4, **caractérisé en ce que** le bourrelet (31) dépasse en direction du volume de remplissage par rapport aux surfaces (222, 232), tournées en direction du volume de remplissage, de la première paroi (22) et de la deuxième paroi (23).

6. Récipient en plastique (100) selon une des revendications 1 à 5, **caractérisé en ce que** le bourrelet (31) est formé de manière périphérique le long de la première zone partielle (221) et/ou de la deuxième zone partielle (231).

7. Récipient en plastique (100) selon une des revendications 1 à 6, **caractérisé en ce que** la première zone partielle (221) et la deuxième zone partielle (231) sont détachées sur le côté du volume de remplissage qui est opposé à la liaison par matière, de manière à former une ouverture de passage pour les doigts (40).

8. Récipient en plastique (100) selon une des revendications 1 à 7, **caractérisé en ce que** celui-ci est réalisé à partir d'un polymère à dipôle, en particulier de PET.

9. Procédé de réalisation d'un bourrelet (31) à partir de matière fondue entre une première paroi (22) et une deuxième paroi (23), située en vis-à-vis de la première paroi (22), d'un corps de récipient (20), comprenant les étapes suivantes :
- mise à disposition d'un récipient en plastique (100) moulé par soufflage-étirage, comportant un corps de récipient (20) formant un volume de remplissage
- liaison par matière d'une première zone partielle (221) de la première paroi (22) du corps de récipient (20) avec une deuxième zone partielle (231) de la deuxième paroi (23), en vue de réaliser une anse (21) formée sur le corps de récipient (20), de sorte que le volume de remplissage s'étend de manière périphérique autour de cette liaison par matière, **caractérisé en ce que** la liaison par matière est réalisée par soudage haute fréquence ou par soudage par friction, sachant que pendant l'opération de soudage, une pression est exercée sur la zone de soudage (32), de sorte qu'au moins une partie de la matière fondue formée pendant l'opération de soudage est poussée hors de la zone de soudage (32) pour former le bourrelet (31) .

10. Procédé selon la revendication 9, **caractérisé en ce que** la matière fondue est poussée en direction du volume de remplissage.

11. Procédé selon la revendication 9 ou 10, **caractérisé en ce que** la matière fondue est poussée hors de la zone de soudage (32) jusqu'à ce qu'un bourrelet (31), formé par la matière fondue, relie la première paroi (22) et la deuxième paroi (23) dans une région dans laquelle la première paroi (22) et/ou la deuxième paroi (23) présente une courbure.

12. Procédé selon une des revendications 9 à 11, **caractérisé en ce que** la matière fondue est poussée hors de la zone de soudage (32) jusqu'à ce qu'un bourrelet (31), formé par la matière fondue, relie la première paroi (22) et la deuxième paroi (23) dans une région dans laquelle la première paroi (22) est espacée de la deuxième paroi (23).

13. Procédé selon une des revendications 9 à 12, **caractérisé en ce que** la matière fondue est poussée hors de la zone de soudage (32) jusqu'à ce qu'un bourrelet (31), formé par la matière fondue, dépasse en direction du volume de remplissage par rapport aux surfaces (222, 232), tournées en direction du volume de remplissage, de la première paroi (22) et de la deuxième paroi (23).

14. Procédé selon une des revendications 9 à 13, **caractérisé en ce que**, avant la liaison par matière de la première zone partielle (221) avec la deuxième zone partielle (231), la première zone partielle (221) et la deuxième zone partielle (231) sont amenées en appui l'une contre l'autre avec des poussoirs mobiles (104, 105), dans un moule de soufflage (102).

15. Procédé selon une des revendications 9 à 14, **caractérisé en ce que**, après la liaison par matière, la première zone partielle (221) et la deuxième zone partielle (231) sont détachées sur le côté du volume de remplissage (F) qui est opposé à la liaison par matière, de manière à former une ouverture de passage des doigts (40).
